# EUROPÄISCHE PATENTANMELDUNG

(11) **EP 2 380 438 A1**
(43) Veröffentlichungstag der Anmeldung: **26.10.2011**
(21) Anmeldenummer: 10160710.9
(22) Anmeldetag: 22.04.2010
(51) Int. Cl.: A01N 25/10, A01N 25/12, A01N 43/70, A01N 47/30, A01P 13/00

(54) **Biozide Stoffe**

(71) Anmelder: LANXESS Deutschland GmbH, 51369 Leverkusen (DE)
(72) Erfinder: Uhr, Hermann, 51373 Leverkusen (DE); Schlawe, Daniel, 50678 Köln (DE); Gerharz, Tanja, 40599 Düsseldorf (DE); Sauer, Frank, 40764 Langenfeld (DE); König, Thomas, 51375 Leverkusen (DE); Ulfik, Benno, 51379 Leverkusen (DE)

(57) **Zusammenfassung**

Die vorliegende Erfindung betrifft biozide und insbesondere algizide Stoffe enthaltend ein oder mehrere Polymere, die ihrerseits ein oder mehrere Biozide wie insbesondere Algizide enthalten, wobei zumindest ein Polymer Strukturelemente aufweist, die sich vom Acrylnitril ableiten. Die Erfindung betrifft weiterhin biozide Mitel enthaltend vorgenannte biozide Stoffe in partikulärer Form, ein Verfahren zur Herstellung der bioziden Stoffe und der bioziden Mittel, sowie die Verwendung der bioziden Mittel zum Schutz von technischen Materialien.

## Beschreibung

Die vorliegende Erfindung betrifft biozide und insbesondere algizide Stoffe enthaltend ein oder mehrere Polymere, die ihrerseits ein oder mehrere Biozide wie insbesondere Algizide enthalten, wobei zumindest ein Polymer Strukturelemente aufweist, die sich vom Acrylnitril ableiten. Die Erfindung betrifft weiterhin biozide Mittel enthaltend vorgenannte biozide Stoffe in partikulärer Form, ein Verfahren zur Herstellung der bioziden Stoffe und der bioziden Mittel, sowie die Verwendung der bioziden Mittel zum Schutz von technischen Materialien.

Biozide, wie insbesondere Fungizide und Algizide werden in technischen Materialien wie beispielsweise Anstrichen und Putzen eingesetzt, um diese Materialien vor dem Befall mit Pilzen und/oder Algen zu schützen. Befall mit Pilzen und/oder Algen führt häufig zu unerwünschten optischen Veränderungen sowie zur Zerstörung des zu schützenden Materials.

Typischerweise erfolgt der Einsatz der Biozide in Form von Formulierungen, wie beispielsweise Lösungen und Dispersionen, die in die technischen Materialien eingearbeitet werden.

In vielen Fällen ist die Langzeitwirkung in den zu schützenden technischen Materialien wie insbesondere Anstrichen und Putzen aber nicht ausreichend gut, weil die Biozide insbesondere im Außenbereich beispielsweise durch Niederschlags- oder Kondenswasser aus den Materialien herausgelöst werden. Das sogenannte "Leaching" führt zu einem Konzentrationsabfall der Biozide der über die Zeit zu einer Verringerung der bioziden Wirkung bis hin zur Wirkungslosigkeit führt. Zusätzlich zu einer verkürzten Wirkungsdauer kann das mit Bioziden belastete Niederschlags- oder Kondenswasser in die Umwelt, insbesondere das Grundwasser gelangen und führt zu einer unerwünschten Kontamination.

Aus diesem Grund ist es das generelle Ziel Leaching soweit zu verlangsamen, dass die freigesetzte Menge an Bioziden so gering ist, dass keine unnötige Umweltbelastung auftritt, die Menge aber gleichzeitig ausreicht, um das Wachstum unerwünschter Mikroorganismen zu unterdrücken.

Aus dem Stand der Technik ist eine Vielzahl von Methoden bekannt, das Leaching-Verhalten und die Freisetzung von Bioziden durch Verkapselung, Adsorption an feste Träger oder Einschluss in einer Polymermatrix zu erreichen.

So ist beispielsweise aus WO 2004/000953 A bekannt, Biozide in Mikrokapseln mit Wandmaterialien aus speziellen Formaldehyd-Melaninharzen einzubringen, um sie in Beschichtungsmaterialien einsetzen zu können, die einen pH-Wert von mehr als 11 aufweisen.

EP 0 758 633 A beschreibt poröse Granulate, die chemische Stoffe, wie z.B. auch Biozide enthalten, die diese in der Anwendung langsam freigeben.

Weiterhin sind in WO 2009/00650 A biozidhaltige, thermoplastische Polymerpartikel einer bestimmten Teilchengröße beschrieben, bei denen das Biozid gleichmäßig im Polymer verteilt ist. Die Polymerpartikel werden durch Extrusion und Mahlung erhalten.

In JP-A 2004-099557 sind feine Partikel von biozidhaltigen Harzen beschrieben, die zur Unterdrückung des Wachstums von Mikroorganismen insbesondere in wässrigen Emulsionsfarben eingesetzt werden.

Die aus dem Stand der Technik bekannten biozidhaltigen Kapseln oder an Träger gebundenen oder in einem Trägermaterial gelösten Biozide weisen aber eine Reihe von Eigenschaften auf, die sie für die Anwendung in technischen Materialien, insbesondere Farben und Putzen nur bedingt geeignet macht. So erlaubt die geringe Scherfestigkeit von biozidhaltigen Kapseln typischerweise keine Einarbeitung z.B. in flüssige oder feste Materialien unter üblichen, technischen Bedingungen. Weiterhin ist die Geschwindigkeit der Biozidfreisetzung schwer zu kontrollieren.

Die bekannten Polymerpartikel weisen im Hinblick auf die typischerweise zu gut wasserlöslichen Biozide und insbesondere Algizide ein nicht unerhebliches Leaching auf.

Aufgabe der vorliegenden Erfindung war es deshalb war es deshalb, biozide Stoffe bereitzustellen, die die Nachteile des Standes der Technik beheben.

Es wurden nun biozide Stoffe gefunden enthaltend ein oder mehrere Polymere enthaltend ein oder mehrere Biozide, wobei zumindest ein Polymer Strukturelemente aufweist, die sich vom Acrylnitril ableiten.

Der Begriff "enthaltend" umfasst im Hinblick auf die ein oder mehrere Biozide enthaltenden Polymere sowohl einen teilweisen oder vorzugsweise vollständigen Einschluss von amorphen oder kristallinen Biozide in das oder die Polymere der bioziden Stoffe als auch eine monolithische Einlagerung von einem oder mehreren Bioziden in das oder die Polymere der bioziden Stoffe, wobei die Einlagerung homogen oder inhomogen sein kann.

Der Begriff "monolithisch" bedeutet in diesem Zusammenhang, dass das Erscheinungsbild einheitlich ist, d.h. eine Phasengrenze zwischen Biozide und Polymer im Unterschied zu den vorgenannten Polymeren in denen amorphe oder kristalline Biozide eingeschlossen sind, im Wellenlängenbereich des sichtbaren Lichts nicht erkennbar ist beziehungsweise vorzugsweise nicht existiert. In diesem Zusammenhang werden häufig in der Literatur auch die Begriffe "erstarrte Lösungen", "erstarrte Schmelzen" oder "Polymermatrix" verwendet.

Der Rahmen der Erfindung umfasst die vor- und nachstehend aufgeführten, allgemeinen oder in Vorzugsbereichen aufgeführten Restedefinitionen bzw. Parameter auch in beliebigen Kombination untereinander.

Im Rahmen der Erfindung ist unter einem Polymer, das Strukturelemente aufweist, die sich vom Acrylnitril ableiten, jedes Polymer zu verstehen, das das Strukturelement der Formel (I) enthält

-CH₂-(CHCN)- (I).

Typischerweise werden solche Polymere durch Polymerisation von Monomermischungen hergestellt, die Acrylnitril enthalten.

In einer besonders bevorzugten Ausführungsform handelt es sich beim Polymer um Styrol-Acrylnitril-Copolymere sogenannte Styrolacrylnitrile (SAN).

Bei solchen SAN kann das Verhältnis von Styrol zu Acrylnitril in der zu polymerisierenden Monomermischung je nach gewünschtem Eigenschaftsprofil in einem breiten Bereich variiert werden. Bevorzugt werden solche SAN verwendet, die zu 50 bis 90 Gew.-% Strukturelemente enthalten, die sich vom Styrol ableiten und die weiterhin zu 10 bis 50 Gew.-% Strukturelemente enthalten, die sich vom Acrylnitril ableiten, wobei die Summe der beiden vorgenannten Strukturelemente bezogen auf das Polymer als solches vorzugsweise 100 Gew.-% beträgt.

Besonders bevorzugt werden solche SAN verwendet, die zu 70 bis 85 Gew.-% Strukturelemente enthalten, die sich vom Styrol ableiten und die weiterhin zu 15 bis 30 Gew.-% Strukturelemente enthalten, die sich vom Acrylnitril ableiten, wobei die Summe der beiden vorgenannten Strukturelemente bezogen auf das Polymer als solches vorzugsweise 100 Gew.-% beträgt.

Geeignete SAN-Typen sind kommerziell erhältlich, beispielsweise als Lustran^{®} der Firma Ineos, Luran^{®} der Firma BASF, Tyril^{®} der Firma Dow Chemicals, Kostil^{®} der Firma Polimeri, Cevian^{®} der Firma Daicel und Sanrex^{®} der Firma Techno Polymer Co..

Es ist ebenfalls bevorzugt, dass das Polymer, das Strukturelemente aufweist, die sich vom Acrylnitril ableiten, als solches eine Glasübergangstemperatur von 50°C bis 220°C, bevorzugt von 80 bis 150°C, besonders bevorzugt 85 bis 130°C aufweist.

In einer weiteren Ausführungsform besitzt das Polymer, das Strukturelemente aufweist, die sich vom Acrylnitril ableiten, eine Molmasse von mehr als 1000 g/mol, bevorzugt von 2.000 bis 200.000 und besonders bevorzugt von 3.000 bis 170.000..

Die bioziden Stoffe enthalten ein oder mehrere Polymere, wobei zumindest ein Polymer, beispielsweise ein Polymer oder ein Blend aus zwei oder mehr Polymeren, das oder die jeweils ein oder mehrere Biozide enthalten, Strukturelemente aufweist, die sich vom Acrylnitril ableiten.

In einer Ausführungsform enthalten die bioziden Stoffe neben zumindest einem Polymer, das Strukturelemente enthält, die sich vom Acrylnitril ableiten weiterhin auch ein oder mehrere Polymere, die keine Strukturelemente aufweisen, die sich vom Acrylnitril ableiten. Solche weiteren Polymere sind bevorzugt thermoplastische Polymere, wie beispielsweise Polyacrylate; Polyalkylenglykole, wie insbesondere Polyethylenglycole oder Polyethylen-Polypropylenglykol-Copolymere (Blockcopolymere oder statistisch verteilt); Polyurethane; Polyamide; Polyharnstoffe; Polycarbonate; Polyester oder Mischungen der vorgenannten Polymere.

In diesem Falle enthält der biozide Stoff ein Blend aus zumindest zwei Polymeren enthaltend ein oder mehrere Biozide.

Der Anteil dieser weiteren Polymere im bioziden Stoff kann in einem breiten Bereich variiert werden, bevorzugt beträgt der Anteil bis zu 20 Gew.-%, vorzugsweise 0,0001 bis 20 Gew.-%, besonders bevorzugt 0,0001 bis 5 Gew.% bezogen auf die Gesamtsumme an Polymeren.

In einer bevorzugten Ausführungsform enthält der biozide Stoff zu mindestens 98 Gew.-% bevorzugt ausschließlich solche Polymere bezogen auf die Gesamtsumme an Polymeren, die Strukturelemente aufweisen, die sich vom Acrylnitril ableiten.

In einer besonders bevorzugten Ausführungsform enthält der biozide Stoff zu mindestens 98 Gew.-% bevorzugt ausschließlich ein Polymer bezogen auf die Gesamtsumme an Polymeren, wobei dieses Polymer, Strukturelemente aufweist, die sich vom Acrylnitril ableiten.

Die erfindungsgemäßen bioziden Stoffe können gegebenenfalls Hilfsstoffe enthalten, die die Eigenschaften und die Stabilität der bioziden Stoffe beeinflussen. Zu nennen sind hier beispielsweise Weichmacher und Stabilisatoren, wie Antioxidantien, Radikalfänger oder UV-Stabilisatoren. Zur Steuerung der Freigabekinetik können auch anorganische Streckmittel, wie natürliche Gesteinsmehle, wie Kaoline, Tonerden, Talkum, Calciumcarbonat (Marmor), Kreide, Quarz, Attapulgit, Montmorillonit oder Diatomeenerde und synthetische anorganische Stoffe, wie hochdisperse Kieselsäure, Aluminiumoxid und Silikate, im bioziden Stoff enthalten sein.

Die erfindungsgemäßen bioziden Stoffe enthalten ein oder mehrere Polymere, die ihrerseits ein oder mehrere Biozide enthalten.

In einer bevorzugten Ausführungsform enthalten die bioziden Stoffe 2 bis 80 Gew.-%, bevorzugt 3 bis 50 Gew.-% und besonders bevorzugt 5 bis 40 Gew.-% an einem oder mehreren Bioziden.

In einer weiteren bevorzugten Ausführungsform enthalten die Polymere der bioziden Stoffe 2 bis 80 Gew.-%, bevorzugt 3 bis 50 Gew.-% und besonders bevorzugt 5 bis 40 Gew.-% an einem oder mehreren Bioziden, wobei in einer noch weiter bevorzugten Ausführungsform das Biozid oder die Biozide monolithisch in das Polymer oder die Polymere eingelagert sind.

Biozide können beispielsweise Fungizide, Algizide, Insektizide, Akarizide, Nematizide, Radizide und Herbizide oder Mischungen davon sein, wobei Fungizide und Algizide oder Mischungen davon bevorzugt sind. Ganz besonders bevorzugte Biozide sind Algizide.

Die Algizide sind bevorzugt ausgewählt aus der Gruppe der Triazin-Algizide, Hamstoff-Algizide und Uracil-Algizide. Triazin-Algizide sind beispielsweise Terbutryn, Cybutryn, Propazin oder Terbuton, Hamstoff-Algizide sind beispielsweise Diuron, Benzthiazuron, Methabenzthiazuron, Tebuthiuron, und Isoproturon, ein Uracil-Algizid ist beispielweise Terbacil.

Die Algizide sind besonders bevorzugt ausgewählt aus der Gruppe bestehend aus Isoproturon, Diuron, Cybutryn und Terbutryn.

Ganz besonders bevorzugt enthält das Polymer oder enthalten die Polymere Isoproturon oder Diuron oder Cybutryn oder Terbutryn oder Diuron und Terbutryn, oder Diuron und Isoproturon oder Terbutryn und Isoproturon oder Cybutryn und Diuron oder Cybutryn und Terbutryn oder Diuron und Terbutryn und Isoproturon.

Gegebenenfalls kann, in einer weiteren Ausführungsform, der biozide Stoff neben Algiziden zusätzlich noch ein oder mehrere weitere biozide Wirkstoffe wie insbesondere Fungizide enthalten oder nicht. Ganz besonders bevorzugt handelt es sich bei den Fungiziden um Azaconazol, Bromuconazol, Cyproconazol, Dichlobutrazol, Diniconazol, Hexaconazol, Metaconazol, Penconazol, Propiconazol, Tebuconazol, Dichlofluanid, Tolylfluanid, Fluorfolpet, Methfuroxam, Carboxin, F e npiclonil, Butenafin, Imazalil, N-Octylisothiazolin-3-on, Dichlor-N-octylisothiazolinon, Mercaptobenzthiazol, Thiocyanatomethyl-thiobenzothiazol, Thiabendazol, N-Butyl-benzisothiazolinon, 1-Hydroxy-2-pyridinthion (und ihre Cu-, Na-, Fe-, Mn-, Zn-Salze), Tetrachlor-4-methylsulfonylpyridin, 3-Iodo-2-propinyl-n-butylcarbamat, Bethoxazin, 2,4,5,6-Tetrachlorisophthalodinitril und Carbendazim.
Insektizide, Akarizide und Nematizide sind beispielsweise ausgewählt aus der Gruppe:
Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,
Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,
Cadusafos, Carbaryl, Carbofuran, Carbophenothion, Carbosulfan, Cartap, Chinomethionat, Cloethocarb, Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimidamid, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,
Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialon, Diflubenzuron, Dimethoat, 3,5-Dimethylphenyl-methylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,
Eflusilanate, Emamectin, Empenthrin, Endosulfan, EPN, Esfenvalerat, Ethiofencarb, Ethion, Ethofenprox, Etrimphos, Etoxazole, Etobenzanid,
Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,
Halofenocid, H C H (CAS RN: 58-89-9), Heptenophos, Hexaflumuron, Hexythiazox, Hydramethylnon, Hydropren,
Imidacloprid, Imiprothrin, Indoxycarb, Iprinomectin, Iprobenfos, Isazophos, Isoamidophos, Isofenphos, Isoprocarb, Isoprothiolane, Isoxathion, Ivermectin,
Kadedrin
Lambda-Cyhalothrin, Lufenuron,
Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,
Naled, NI 125, Nicotin, Nitenpyram, Noviflumuron,
Omethoat, Oxamyl, Oxydemethon M, Oxydeprofos,
Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium
Quinalphos,
Resmethrin, Rotenon,
Salithion, Sebufos, Silafluofen, Spinosad, Spirodiclofen, Spiromesifen, Sulfotep, Sulprofos,
Tau-fluvalinat, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,
Vamidothion, Xylylcarb, Zetamethrin;
Molluscizide:
Fentinacetat, Metaldehyd, Methiocarb, Niclosamid;
Herbizide sind beispielsweise ausgewählt aus der Gruppe:
Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryn, Azimsulfuron,
Benazolin, Benfluralin, Benfuresat, Bensulfuron, Bensulfid, Bentazon, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylat, Bialaphos, Benzoyl-prop, Bromobutide, Butroxydim,
Carbetamid, Carfentrazone-ethyl, Carfenstrol, Chlomethoxyfen, Chloramben, Chlorbromuron, Chlorflurenol, Chloridazon, Chlorimuron, Chlornitrofen, Chloressigsäure, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloat, Cycloxydim, Chloroxynil, Clodinafop-propargyl, Cumyluron, Clometoxyfen, Cyhalofop, Cyhalofop-butyl, Clopyrasuluron, Cyclosulfamuron,
Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
Eglinazin, Endothal, EPTC, Esprocarb, Ethalfluralin, Ethidimuron, Ethofumesat, Ethobenzanid, Ethoxyfen, Ethametsulfuron, Ethoxysulfuron,
Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamon, Flumioxzim, Flupyrsulfuron-methyl, Fluthiacet-methyl,
Glyphosate, Glufosinate-ammonium
Haloxyfop, Hexazinon,
Imazamethabenz, Isoxaben, Isoxapyrifop, Imazapyr, Imazaquin, Imazethapyr, Ioxynil, Isopropalin, Imazosulfuron, Imazomox, Isoxaflutole, Imazapic,
Ketospiradox,
Lactofen, Lenacil, Linuron,
MCPA, MCPA-hydrazid, MCPA-thioethyl, MCPB, Mecoprop, Mecoprop-P, Mefenacet, Mefluidid, Mesosulfuron, Metam, Metamifop, Metamitron, Metazachlor, Methabenzthiazuron, Methazol, Methoroptryne, Methyldymron, Methylisothiocyanat, Metobromuron, Metoxuron, Metribuzin, Metsulfuron, Molinat, Monalid, Monolinuron, MSMA, Metolachlor, Metosulam, Metobenzuron,
Naproanilid, Napropamid, Naptalam, Neburon, Nicosulfuron, Norflurazon, Natriumchlorat,
Oxadiazon, Oxyfluorfen, Oxysulfuron, Orbencarb, Oryzalin, Oxadiargyl,
Propyzamid, Prosulfocarb, Pyrazolate, Pyrazolsulfuron, Pyrazoxyfen, Pyribenzoxim, Pyributicarb, Pyridat, Paraquat, Pebulat, Pendimethalin, Pentachlorophenol, Pentoxazon, Pentanochlor, Petroleumöle, Phenmedipham, Picloram, Piperophos, Pretilachlor, Primisulfuron, Prodiamine, Profoxydim, Prometryn, Propachlor, Propanil, Propaquizafob, Propham, Propisochlor, Pyriminobac-methyl, Pelargonsäure, Pyrithiobac, Pyraflufen-ethyl,
Quinmerac, Quinocloamine, Quizalofop, Quizalofop-P, Quinchlorac,
Rimsulfuron
Sethoxydim, Sifuron, Simazine, Simetryn, Sulfosulfuron, Sulfometuron, Sulfentrazone, Sulcotrione, Sulfosate,
Teeröle, TCA, TCA-Natrium, Tebutam, Terbacil, Terbumeton, Terbutylazine, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron,
Vernolat.
Radizide sind beispielsweise ausgewählt aus der Gruppe der Auxine und umfassen insbesondere:
2,4-Dichlorphenoxyessigsäure, 2,4-Dichlorphenoxybuttersäure, alpha-Naphthalinessigsäure, 4-Amino-3,5,6-trichiorpicolinsäure, alpha-(p-Phenoxy)isobuttersäure, 2-(4-Chor-2-methylphenoxy)propionsäure, sowie die Ester und Amide der vorgenannten Säuren, wie insbesondere die n-Octyl-, 2-Ethylhexyl- und Polyglycolester von 2-(4-Chor-2-methylphenoxy)propionsäure.

In einer Ausführungsform beträgt der Gehalt des bioziden Stoffs an einem oder mehreren Polymeren, die ihrerseits ein oder mehrere Biozide enthalten, wobei zumindest ein Polymer Strukturelemente aufweist, die sich vom Acrylnitril ableiten, mehr als 90 Gew.-%, bevorzugt mehr als 95 Gew.-%. Lediglich zur Klarstellung sei angemerkt dass sich die Angabe auf das oder die Polymere einschließlich ihres Gehaltes an bioziden Wirkstoffen bezieht.

Die erfindungsgemäßen bioziden Stoffe können beispielsweise durch Polymerisation der den Polymeren zugrunde liegenden Monomeren in Gegenwart der Biozide und gegebenenfalls in Gegenwart von Hilfsstoffen erhalten werden. Diese Art der Herstellung wird nachstehend auch "Einpolymerisation" genannt.

Vorzugsweise werden die bioziden Stoffe in einem Verfahren hergestellt, das dadurch gekennzeichnet ist, dass
a) zumindest ein oder mehrere Polymere, von denen zumindest ein Polymer Strukturelemente aufweist, die sich vom Acrylnitril ableiten und ein oder mehrere Biozide und/oder Hilfsstoffe gemischt werden und
b) die nach a) erhaltene Mischung bei einer Temperatur von 50 bis 220°C extrudiert wird.

Für das Mischen in Schritt a) werden das oder die Polymere vorzugsweise in granulierter, geschuppter oder gepulverter Form eingesetzt.

Die Extrusion gemäß Schritt b) erfolgt vorzugsweise dadurch, dass man die gemäß Schritt a) erhaltene Mischung bei einer Temperatur von 50 bis 220 °C innig miteinander in Kontakt bringt, und durch Einbringung mechanischer Energie im Wesentlichen homogenisiert.

Technisch verwendet man hierzu Extruder, die meist als Schneckenextruder ausgelegt sind, aber auch Kolbenextruder sein können. Die Schneckenextruder können sowohl mit nur einer Welle als auch mit einer Doppelwelle ausgerüstet sein. Sie werden beispielsweise durch einen Einfülltrichter oder einer anderen Aufgabeeinrichtung mit der nach Schritt a) erhaltenen Mischung beschickt. Während die Schnecke die Feststoffmischung durch den Extruder transportiert, wird diese zunächst erwärmt und dann in der Schnecke bei der gewünschten Temperatur im Wesentlichen homogenisiert und plastifiziert. Anschließend wird das Extrudat über eine Düse zum Beispiel als Strang aus dem Extruder gepresst. Für die Extrudierung können sowohl Ein-, wie auch Mehrschneckenextruder eingesetzt werden.

Die verschiedenen im Extruder auftretenden Temperaturen können in einem großen Temperaturbereich und in verschiedenen Zonen variieren.

Die Kontaktzeiten im Extruder im erwärmten Teil des Extruders können in einem sehr breiten Bereich variieren. Im Allgemeinen betragen die Kontaktzeiten 5 Sekunden bis 5 Minuten, bevorzugt 10 Sekunden bis 2 Minuten.

Je nach Bedarf oder gewünschtem Homogenisierungsgrad werden mehrer Extruderdurchläufe gefahren.

Es ist dem Fachmann klar, dass sich je nach Zusammensetzung und Eigenschaften der Polymere, der Biozide und Hilfsstoffe entweder die Einpolymerisation oder die Extrusion besser eignet. Dies ist für den Fachmann, sofern es sich nicht aus den Materialeigenschaften der eingesetzten Stoffe schon selbst ergibt, in einfacher Weise durch Vorversuche zu ermitteln. Für die bevorzugten bioziden Stoffe ist jedoch insbesondere im Falle algizider Stoffe die Extrusion typischerweise ebenfalls bevorzugt.

Die erfindungsgemäßen bioziden Stoffe eignen sich insbesondere für den Einsatz in oder als biozide Mittel. Daher sind von der Erfindung auch biozide Mittel enthaltend zumindest einen erfindungsgemäßen bioziden Stoff umfasst sowie die Verwendung der erfindungsgemäßen bioziden Stoffe als biozides Mittel oder in bioziden Mitteln.

Für den Einsatz in den erfindungsgemäßen bioziden Mitteln liegt der biozide Stoff enthaltend ein oder mehrere Biozide vorzugsweise partikulär vor, wobei der Begriff partikulär bedeuten soll, dass mehr als 90 %, insbesondere mehr als 95% aller Partikel gewichtsgemittelt eine Teilchengröße von 150 µm oder weniger, vorzugsweise von 1 bis 150 µm, besonders bevorzugt 1 bis 100 µm haben.

Die Herstellung von partikulären bioziden Stoffen kann in an sich bekannter Weise durch Zerkleinerung wie beispielsweise durch Mahlen der bioziden Stoffe erfolgen.

Die Mahlung kann sowohl in Gegenwart als auch in Abwesenheit von nicht-lösenden Flüssigkeiten erfolgen. Unter nicht-lösenden Flüssigkeiten sind solche zu verstehen, in denen das oder die Polymere des bioziden Stoffes zu weniger als 1 Gew.-% löslich sind. Typischerweise wird bei Gegenwart nicht-lösender Flüssigkeiten als nicht-lösende Flüssigkeit Wasser eingesetzt.

Die Zerkleinerung erfolgt beispielsweise durch mechanische Krafteinwirkung wie Stoß, Schlag, Druck, Reibung oder Scherung oder Kombinationen vorgenannter Kräfte.

Bei Einsatz von Mahlvorrichtungen erfolgt mechanische Krafteinwirkung typischerweise über rotierende, schwingende, taumelnde oder sonstige Bewegungen ausführende Mahlorgane. Geeignete Mahlvorrichtungen sind beispielsweise Kugelmühlen, Schneidmühlen, Hammermühlen wie auch Strahlmühlen, wie z.B. Feinprallmühlen, Gegenstrahlmühlen, Querstrommühlen oder Spiralstrahlmühlen. Weitere Mahlvorrichtungen sind beispielsweise Walzen-, Rohr-, Scheiben-, Zahnscheiben-, Schwing-, Glocken-, Federkraftroll-, Fliehkraftroll- oder Schlagkreuzmühlen.

Im Fall von Polymeren mit niedrigem Glasübergangstemperatur kann die Zerkleinerung auch bei erniedrigten Temperaturen durchgeführt werden, um eine ausreichende Sprödigkeit des Mahlgutes zu erreichen. Als Kühlmittel können hier Kohlendioxid, Eis oder flüssiger Stickstoff verwendet werden, oder die Mühlen werden durch entsprechende Kühlaggregate auf die entsprechende Temperatur gekühlt.

Vorzugsweise werden die partikulären bioziden Stoffe in einem Verfahren hergestellt, das neben den obenstehend aufgeführten Schritten a) und b) einen Schritt c) umfasst, der dadurch gekennzeichnet ist, dass das nach Schritt b) erhaltene Extrudat derart zerkleinert wird, dass mehr als 90 Gew.-%, insbesondere mehr als 95 Gew.-% aller Partikel bezogen auf das eingesetzt Extrudat eine Teilchengröße von 150 µm oder weniger, vorzugsweise von 1 bis 150 µm, besonders bevorzugt 1 bis 100 µm aufweisen.

Die partikulären, bioziden Stoffe besitzen typischerweise, bedingt durch die mechanische Zerkleinerung eine unregelmäßige Form, insbesondere mit Rillen oder Furchen. Die Verteilung des Wirkstoffes ist aufgrund der Extrudierung typischerweise im Wesentlichen homogen.

Vorzugsweise weisen die erfindungsgemäßen, bioziden Stoffe oder partikulären bioziden Stoffe einen Anteil an flüchtigen organischen Verbindungen mit einem Siedepunkt von 250°C bei 1013hPa (VOC, volatile organic content) von kleiner 1 Gew.-%, bevorzugt von kleiner 0,1 Gew.-%, besonders bevorzugt von kleiner 0,01 Gew.-% und ganz besonders bevorzugt von kleiner 0,001 Gew.-%.

Vorzugsweise sind die partikulären bioziden Stoffe frei von Aziridinen.

Die erfindungsgemäßen bioziden Mittel können in beliebiger Formulierung vorliegen wie beispielsweise in Form von Suspensionskonzentraten (SC), Spritzpulvern (WP), Wasserdispergierbare Granulaten (WG) oder einfachen Pulvermischungen, wobei Suspensionskonzentrate (SC), Pulvermischungen und Wasserdispergierbare Granulate (WG) bevorzugt sind.

Grundsätzlich sind bevorzugte Formulierungsarten im Wesentlichen abhängig vom Einsatzzweck und den dafür geforderten physikalischen Eigenschaften. Da diese jedoch bekannt sind, ist es für den Fachmann gängige Praxis, in wenigen Versuchen eine bevorzugte Formulierungsart zu ermitteln.

Die Formulierungen können zusätzlich auch noch weitere Stoffe, wie Stabilisatoren, Gebindekonservierungsmittel und weitere nicht in Polymeren enthaltene Biozide, wie beispielsweise Fungizide, Algizide, Insektizide, Akarizide, Nematizide, Radizide und Herbizide oder Mischungen davon, bevorzugt Fungizide oder Algizide oder Mischungen davon, ganz bevorzugt Algizide enthalten.

Die bioziden Mittel können neben den partikulären, bioziden Stoffen gegebenenfalls weiterhin verschiedene Hilfsstoffe enthalten. Für die nachstehend genannten Hilfsstoffe besteht jeweils unabhängig voneinander auch die Möglichkeit, dass sie nicht enthalten sind. Mögliche Hilfsstoffe sind beispielsweise
- Grenzflächenaktive Stoffe, wie beispielsweise Tenside. Tenside können beispielsweise nichtionische, kationische und amphotere Tenside, vorzugsweise anionische Tenside sein. Geeignete anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium-, Kalium-, Magnesium-, Calcium-, sowie Ammonium- und Triethanolamin-Salze. Die Alkylethersulfate, Alkyletherphosphate und Alkylethercarboxylate können jeweils beispielsweise zwischen 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat. Die erfindungsgemäßen bioziden Mittel können dabei beispielsweise 0,01 bis 10, vorzugsweise 0,2 bis 8, besonders bevorzugt 0,3 bis 5 und ganz besonders bevorzugt 0,5 bis 3 Gew.-% an grenzflächenaktiven Stoffen enthalten.
- Entschäumer. Als Entschäumer werden im Allgemeinen grenzflächenaktive Stoffe eingesetzt, die in der tensidischen Lösung nur schwach löslich sind. Bevorzugte Entschäumer sind solche, die sich von natürlichen Fetten und Ölen, Petroleum-Derivaten oder Siliconölen ableiten.
- Benetzungsmittel, wie beispielsweise Alkali-, Erdalkali-, Ammoniumsalze von aromatischen Sulfonsäuren, z.B. Lignin-, Phenol-, Naphthalin-und Dibutylnaphthalinsulfonsäure, sowie von Fettsäuren, Alkyl-und Alkylarylsulfonaten, Alkyl-, Laurylether-und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl-oder Nonylphenol, Alkylphenol-oder Tributylphenylpolyglycolether, Trissterylphenyletherethoxylate, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose. Die erfindungsgemäßen bioziden Mittel können dabei beispielsweise 0,01 bis 8, vorzugsweise 0,2 bis 6, besonders bevorzugt 0,3 bis 5 und ganz besonders bevorzugt 0,5 bis 3 Gew.-% an Benetzungsmitteln enthalten.
- Emulgatoren, wie beispielsweise Natrium-, Kalium-und Ammoniumsalze von gradkettigen aliphatischen Carbonsäuren der Kettenlänge C₁₂-C₂₀, Natriumhydroxyoctadecansulfonat, Natrium-, Kalium-und Ammoniumsalze von Hydroxyfettsäuren der Kettenlänge C₁₂-C₂₀ und deren Sulfierungs-bzw. Acetylierungsprodukte, Alkylsulfate, auch als Triethanolaminsalze, Alkyl-(C₁₀-C₂₀)-sulfonate, Alkyl(C₁₀-C₂₀)-arylsulfonate, Dimethyldialkyl(C₈-C₁₈)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge C₄-C₁₆, Sulfobernsteinsäure-4-Ester mit Polyethylenglykolethern von einwertigen aliphatischen Alkoholen der Kettenlänge C₁₀-C₁₂ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium-und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol. Die erfindungsgemäßen bioziden Mittel können dabei beispielsweise 0,01 bis 15, vorzugsweise 0,2 bis 8, besonders bevorzugt 0,5 bis 6 und ganz besonders bevorzugt 1 bis 5 Gew.-% an Emulgatoren enthalten.
- Dispergiermittel, wie beispielsweise Alkylphenolpolyglycolether. Die erfindungsgemäßen bioziden Mittel können dabei beispielsweise 0,01 bis 8, vorzugsweise 0,1 bis 6, besonders bevorzugt 0,2 bis 5 und ganz besonders bevorzugt 0,4 bis 3 Gew.-% an Dispergiermitteln enthalten.
- Stabilisatoren, wie z.B. Cellulose und Cellulosederivate. Die erfindungsgemäßen bioziden Mittel können dabei beispielsweise 0,01 bis 6, vorzugsweise 00,1 bis 3, besonders bevorzugt 0,01 bis 2 und ganz besonders bevorzugt 0,01 bis 1 Gew.-% an Stabilisatoren enthalten.
- Haftmittel, wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipid sowie Paraffinöle. Die erfindungsgemäßen bioziden Mittel können dabei beispielsweise 0,01 bis 8, vorzugsweise 0,1 bis 4, besonders bevorzugt 0,2 bis 3 und ganz besonders bevorzugt 0,2 bis 2 Gew.-% an Haftmitteln enthalten.
- Spreitmittel, wie beispielsweise Isopropylmyristat Polyoxyethylennonylphenylether und Polyoxyethylenlaurylphenylether. Die erfindungsgemäßen bioziden Mittel können dabei beispielsweise 0,01 bis 20, vorzugsweise 0,1 bis 10, besonders bevorzugt 0,1 bis 5 und ganz besonders bevorzugt 0,1 bis 2 Gew.-% an Spreitmitteln enthalten.
- Duftstoffe und Farbstoffe, wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink. Die erfindungsgemäßen bioziden Mittel können dabei beispielsweise jeweils 0,001 bis 4, vorzugsweise 0,01 bis 1, besonders bevorzugt 0,01 bis 0,8 Gew.-% an Duftstoffen und Farbstoffen enthalten.
- Puffersubstanzen, Puffersysteme oder pH-Wert-Regulatoren. Die erfindungsgemäßen bioziden Mittel können dabei beispielsweise jeweils 0,01 bis 10, vorzugsweise 0,1 bis 5, Gew.-% an Puffersubstanzen, Puffersystemen oder pH-Wert-Regulatoren enthalten.
- Verdickungsmittel, wie beispielweise Polysaccharide, Xanthan Gum, Natrium- oder Magnesium Silicate, Heteropolysaccharide, Alginate, Carboxymethylcellulose, Gummi arabicum oder Polyacrylsäuren, bevorzugt Xanthan Gum.
- Stabilisatoren wie beispielsweise Antioxidantien, Radikalfänger oder UV-Absorber.

Der Gesamtgehalt der oben genannten Hilfsmittel in den bioziden Mitteln beträgt im Allgemeinen beispielsweise von 0,001 bis 20 Gew.-%, bevorzugt von 0,1 bis 15 Gew.-% und besonders bevorzugt von 0,1 bis 10 Gew.-%.

Feste Formulierungen, wie beispielsweise Pulvermischungen oder wasserdispergierbare Granulate (WG) können neben den partikulären bioziden Stoffe auch noch feste Hilfsmittel wie z.B. natürliche Gesteinsmehle, wie Kaoline, Tonerden, Talkum, Marmor, Kreide, Quarz, Attapulgit, Montmorillonit oder Diatomeenerde oder synthetische anorganische Stoffe, wie hochdisperse Kieselsäure, Aluminiumoxid und Silikate enthalten oder Mischungen davon.

Des weiteren können die festen Formulierungen auch noch weitere Hilfsmittel, wie grenzflächenaktiven Stoffe, Benetzungsmittel, Emulgatoren, Dispergiermittel, Entstaubungsmittel oder Fließhilfsmittel oder Trennmittel enthalten. Bei den grenzflächenaktiven Stoffen, Benetzungsmitteln, Emulgatoren oder Dispergiermitteln können die Stoffe verwendet werden, die man zur Herstellung der flüssigen Formulierungen wie Suspensionskonzentrate, Dispersionen, Gele oder Pasten verwenden kann.

Entstaubungsmittel sind beispielsweise Polyglykole und Polyglykolether. Die erfindungsgemäßen bioziden Mittel können dabei beispielsweise jeweils 0,01 bis 2, vorzugsweise 0,05 bis 1, besonders bevorzugt 0,1 bis 0,5 Gew.-% an Entstaubungsmitteln enthalten.

Als Fließmittel oder Trennmittel können beispielsweise hochdisperse Kieselsäure oder Mg-Salze von Fettsäuren eingesetzt werden. Die erfindungsgemäßen bioziden Mittel können dabei zur Verbesserung der Fließfähigkeit der Feststoffe jeweils 0,01 bis 5, vorzugsweise 0,05 bis 3, besonders bevorzugt 0,1 bis 2 Gew.-% an Fließmittel enthalten.

Die festen Formulierungen können sich in an sich bekannter Weise beispielsweise durch innige Vermischung der partikulären bioziden Stoffe mit den festen Hilfsmitteln oder durch gemeinsame Zerkleinerung von festen Hilfsmitteln mit den bioziden Stoffen erhalten werden. Weiterhin können die festen Formulierungen durch Trocknung, beispielsweise Sprühtrocknung, einer flüssigen Formulierung erhalten werden.

Bevorzugte feste Formulierungen enthalten beispielsweise 10 bis 100 Gew.-% der erfindungsgemäßen partikulären, bioziden Stoffe, vorzugsweise 15 bis 98 Gew.-%.

Flüssige Formulierungen können beispielsweise Suspensionskonzentrate (SC), Dispersionen, Gele oder Pasten sein.

Bevorzugte flüssige Formulierungen sind bevorzugt wässrige Dispersionen.

Die flüssigen Formulierungen wie insbesondere die Dispersionen lassen sich in an sich bekannter Weise beispielsweise dadurch herstellen, indem man die bioziden Stoffe und die weiteren Stoffe, die in der flüssigen Formulierung enthalten sein sollen, gemeinsam zerkleinert oder die partikulären, bioziden Stoffe und die weiteren Stoffe, die in der flüssigen Formulierung enthalten sein sollen, mittels eines Dissolvers oder Rührers innig miteinander vermischt.

Die flüssigen Formulierungen enthalten im Allgemeinen 2 bis 95 Gew.-%, vorzugsweise 5 bis 75 Gew.-% der erfindungsgemäßen partikulären, bioziden Stoffe.

Die erfindungsgemäßen bioziden Stoffe, partikulären bioziden Stoffe und bioziden Mittel weisen eine gute Wirkung wie die in ihnen enthaltenen Biozide auf. Insbesondere weisen die erfindungsgemäßen bioziden Stoffe, partikulären bioziden Stoffe und bioziden Mittel, sofern sie Algizide enthalten insbesondere gegen Algen und, sofern sie Fungizide enthalten, gegen Pilze, oder sofern sie Algizide und Fungizide enthalten gegen Algen und Pilze auf. Sie besitzen weiterhin im Vergleich zu anderen bioziden Polymeren eine deutlich verringerte Leaching-Rate.

Von der Erfindung sind daher auch partikuläre biozide Stoffe umfasst, die, einen D90-Wert von 150 µm bevorzugt 10 bis 100 µm besitzen und im 72h-Wässerungstest eine Leaching-Rate des im bioziden Stoff enthaltenen Biozids von weniger als 30 % aufweisen, vorzugsweise weniger als 20 %.

Sofern mehrere Biozide im partikulären bioziden Stoff enthalten sind, wird der 72h-Wässerungstest für jedes im partikulären bioziden Stoff enthaltene Biozid durchgeführt.

In diesem Falle sind von der Erfindung auch partikuläre biozide Stoffe umfasst, die, einen D90-Wert von 150 µm bevorzugt 10 bis 100 µm besitzen und im 72h-Wässerungstest eine Leaching-Rate von zumindest einem bevorzugt allen im bioziden Stoff enthaltenen Biozide von weniger als 30 % aufweisen, vorzugsweise weniger als 20 %.

Unter dem D90 -Wert ist dabei die Teilchengröße zu verstehen, bei der 90 Gew.-% aller Teilchen des partikulären bioziden Stoffes kleiner sind als der angegebene D90-Wert.

Der 72h-Wässerungstest wird so durchgeführt, dass soviel partikulärer biozider Stoff in eine Menge von vorzugsweise 500 bis 1000 ml deionisiertem Wasser eingebracht wird, dass die in dieser Form eingebrachte Menge an Biozid der Löslichkeit des freien Biozids bei 20°C in der gewählten Wassermenge entspricht, die so erhaltene Suspension 72 Stunden bei 20°C gerührt wird und der in der Wasserphase gelöste Anteil anschließend analytisch, vorzugsweise durch HPLC bestimmt wird.

Für den Fachmann ist klar, dass die Leaching-Rate sowohl von der Teilchengröße als auch dem gewählten Polymer des bioziden Polymers abhängt. Insofern sind vorstehend Teilchengrößen und Leaching-Rate angegeben.

Bei der Untersuchung von mehreren Bioziden mit unterschiedlicher Wasserlöslichkeit müssen jeweils Einzelversuche für die einzelnen Biozide durchgeführt werden.

Daher ist von der Erfindung auch ein Verfahren zur Bekämpfung von Mikroorganismen umfasst, das dadurch gekennzeichnet ist, dass die Bekämpfung unter Einsatz der erfindungsgemäßen bioziden Mittel oder den erfindungsgemäßen partikulären, bioziden Stoffe erfolgt.

Enthalten die erfindungsgemäßen partikulären, bioziden Polymere und bioziden Mittel Algizide so können mit guter Wirkung Algen bekämpft werden.

Bei Algen handelt es sich vorzugsweise um prokaryotische Algen (Cyanophyta, Blaualgen) wie beispielsweise Vertreter aus der Unterklasse Coccogoneae und der Unterklasse Hormogoneae.

Beispielhaft seien aus der Ordnung Chroococcales Arten der Gattungen Synechococcus, Chroococcus, Gloeocapsa, Aphanocapsa, Aphanothece, Microcystis und Merismopedia; aus den Ordnungen Chamaesiphonales und Pleurocapsales Arten der Gattungen Chamaesiphon und Dermatocarpa; aus der Ordnung Oscillatoriales Arten der Gattungen Phormidium, Schizothrix, Spirulina, Plectonema und Lyngbya; aus der Ordnung Nostocales Arten der Gattungen Nostoc, Rivularia, Tolypothrix, Scytonema, Anabaenopsis, Calothrix und Aulosira; aus der Ordnung Stigonematatles Arten der Gattungen Stigonema, Fischerella, Hapalosiphon und Mastigocladus genannt.

Ferner zeigen die Verbindungen auch eine gute Wirksamkeit gegen eukaryotische Vertreter aus den Abteilungen Heterokontophyta, Rhodophyta, Chlorophyta, Euglenophyta, Cryptophyta, Dinophyta und Haptophyta.

Beispielhaft seien aus der Klasse Xanthophyceae Arten der Gattungen Tribonema und Vaucheria; aus der Klasse Chrysophyceae Arten der Gattungen Chrysocapsa, Rhizochrysis, Cfhrysosphaera, Phaeothamnion und Thallochrysis; aus der Klasse Phaeophyceae (Braunalgen) Arten der Gattungen Ectocarpus, Pylaiella, Cutleria, Zanardinia, Dictyota, Padina, Dictyopteris, Laminaria, Macrocystis, Lessonia, Nerocystis, Chorda, Alaria, Fucus, Ascophyllum, Himanthalia, Sargassum, Cystoseira, Halidrys, Pelvetia, Coccophora und Durvilla; aus der Klasse Rhodophyceae (Rotalgen) Arten der Gattungen Porphyridum, Bangia, Porphyra, Corallina, Lithothamnia, Lithophyllum, Rhodymania, Delesseria, Grinnellia, Platysiphonia, Polysiphonia, Ceramium, Plumaria, aus der Klasse Chlorophyceae (Grünalgen) Arten der Gattungen Chlorococcum, Chlorella, Spongiochloris, Monostroma, Ulva, Enteromorpha, Ulothrix, Trentepohlia, Apatococcus, Desmococcus, Cladophora, Siphonocladus, Valonia, Caulerpa, Bryopsis, Acetabularia, Halimeda und Tuna genannt.

Enthalten die erfindungsgemäßen partikulären, bioziden Stoffe und bioziden Mittel Fungizide so können mit guter Wirkung Pilze bekämpft werden.

Als Pilze seien beispielsweise Mikroorganismen der folgenden Gattungen genannt:

Alternaria, wie beispielsweise Alternaria tenuis, Aspergillus, wie beispielsweise Aspergillus niger, Chaetomium, wie beispielsweise Chaetomium globosum, Coniophora, wie beispielsweise Coniophora puetana, Lentinus, wie beispielsweise Lentinus tigrinus, Penicillium, wie beispielsweise Penicillium glaucum, Polyporus, wie beispielsweise Polyporus versicolor, Aureobasidium, wie beispielsweise Aureobasidium pullulans, Sclerophoma, wie beispielsweise Sclerophoma pityophila, Trichoderma, wie beispielsweise Trichoderma viride.

Daher ist von der Erfindung auch ein Verfahren zur Bekämpfung von Mikroorganismen umfasst, das dadurch gekennzeichnet ist, dass die Bekämpfung unter Einsatz der erfindungsgemäßen bioziden Mittel oder den erfindungsgemäßen partikulären, bioziden Stoffen erfolgt.

Die Erfindung betrifft weiterhin die Verwendung der erfindungsgemäßen partikulären, bioziden Stoffe oder der bioziden Mittel zum Schutz von technischen Materialien, sowie technische Materialien enthaltend die erfindungsgemäßen bioziden Mittel oder partikulären, bioziden Stoffe.

Die Erfindung betrifft weiterhin die Verwendung von Polymeren, die Strukturelemente aufweisen, die sich vom Acrylnitril ableiten zur Herstellung von bioziden Stoffen enthaltend diese Polymere sowie zumindest ein Biozid.

Technische Materialien sind beispielsweise Baumaterialien, Holz, Holzwerkstoffe, Holz-Plastik-Verbundstoffe, Dichtungsmassen, Fugendichtungen, Kunststoffe, Folien, Steinplatten, Textilien wie zum Beispiel Planen und Zelte, Textilverbundstoffe, Anstrichmittel wie zum Beispiel Farben und Lacke, Beton, Zement, Mörtel oder Beschichtungsmitteln wie beispielsweise Putze.

Besonders bevorzugt werden die bioziden Stoffe, partikulären bioziden Stoffe oder bioziden Mittel, insbesondere wenn sie Algizide oder Fungizide oder Mischungen davon enthalten in Dispersionsfarben oder Beschichtungsmitteln wie beispielsweise Putzen eingesetzt.

Unter Dispersionsfarben werden wässrige, typischerweise alkalisch eingestellte Anstrichmittel auf Basis von Polymerdispersionen verstanden. Die zur Herstellung von Dispersionsfarben eingesetzten Polymerdispersionen enthalten beispielhaft und vorzugsweise Polyacrylate, Styrolacrylate, Polyvinylacetat, Polyvinylpropionat u.a. Polymere.

Putze können aus vielerlei Materialien bestehen, prinzipiell aber typischerweise aus einem Bindemittel, Zuschlagsstoffen und Wasser. Die verschiedenen Putze werden meist nach ihren Materialien unterschieden. Weil der Einfluss der Bindemittel die Eigenschaften des Putzes am meisten beeinflusst, dient das Bindemittel als am häufigsten verwendetes Unterscheidungskriterium. Nach dem Bindemittel unterscheidet man mineralische Putze und Kunstharzputze. Mineralische Putze haben anorganische Bindemittel, besonders Kalk und Zement, aber auch Gips, insbesondere für Innenräume, oder Lehm als klassische Version. Kunstharzputze haben organische Bindemittel.

Die Anwendungskonzentrationen der erfindungsgemäßen bioziden Stoffe, partikulären bioziden Stoffe oder bioziden Mittel richtet sich nach Art und dem Vorkommen der zu bekämpfenden Mikroorganismen, sowie nach der Zusammensetzung des zu schützenden Materials. Die optimale Einsatzmenge kann durch Testreihen in einfacher und dem Fachmann hinlänglich bekannter Weise ermittelt werden.

Die technischen Materialien wie insbesondere die fertige Dispersionsfarben oder Putze enthalten im allgemeinen soviel der erfindungsgemäßen bioziden Stoffe, partikulären bioziden Stoffe oder bioziden Mittel, dass ein Biozidgehalt von 0,0001 bis 0,5 Gew.-%, bevorzugt von bis von 0,0005 bis 0,3 Gew.-%, erreicht wird.

Der Vorteil der Erfindung ist darin zu sehen, dass die erfindungsgemäßen bioziden Polymere ein überlegenes, weil vermindertes Leachingverhalten zeigen.

### Beispiele:

### Beispiel 1a (erfindungsgemäß)

2,00 kg/h eines Styrolacrylnitrils (SAN, Lustran® SAN M60 der Firma Ineos; 28 % Gehalt Acrylnitril) und 0,857 kg/h Diuron wurden kontinuierlich in den Einzugstricher eines Doppelschneckenextruder des Typs ZSK 34 (Eigenbau Bayer Technology Services GmbH) dosiert und gemeinsam aufgeschmolzen. Die Drehzahl des Extruders betrug 110 U/min, die Beheizungstemperatur 200 °C und der austretende Extrudat-Strang wies eine Temperatur von 194 °C auf. Der extrudierte Strang wurde mit einer Luftlanze gekühlt und anschließend granuliert.

Das so erhaltene granulierte, biozide (algizide) Polymer zeigte in der DCS-Messung eine mittlere Glasumwandlungstemperatur von 58°C. Der Wirkstoffgehalt des granulierten Extrudates betrug 25,5 Gew.-% (gemessen per HPLC)

### Beispiel 1b (zum Vergleich)

2,00 kg/h eines Polystyrols (PS, Polystyrol 145D der Firma BASF SE) und 0,857 kg/h Diuron wurden kontinuierlich in den Einzugstricher eines Doppelschneckenextruder des Typs ZSK 34 (Eigenbau Bayer Technology Services GmbH) dosiert und gemeinsam aufgeschmolzen. Die Drehzahl des Extruders betrug 110 U/min, die Beheizungstemperatur 200 °C und der austretende Extrudat-Strang wies eine Temperatur von 194 °C auf. Der extrudierte Strang wurde mit einer Luftlanze gekühlt und anschließend granuliert.

Das so erhaltene granulierte, biozide (algizide) Polymer zeigte in der DCS-Messung eine mittlere Glasumwandlungstemperatur von 60,5°C. Der Wirkstoffgehalt des granulierten Extrudates betrug 25,5 Gew.-% (gemessen per HPLC)

### Beispiele 2a (erfindungsgemäß) und 2b (zum Vergleich)

Die gemäß Beispielen 1a (Beispiel 2a) und 1b (Beispiel 2b) erhaltenen granulierten, bioziden (algiziden) Polymere wurden zunächst in einer Gebläsemühle vom Typ Bauermeister UTL zerkleinert und dann an einer Alpine Sichtermühle Typ 50 ZPS bei einer Mühlenrotorumfanggeschwindigkeit von 105 m/s und einer Sichtradumfanggeschwindigkeit von 26 m/s bei einer Temperatur von 25 bis 30 °C fein gemahlen.

Die so erhaltenen partikulären bioziden (algiziden) Polymere wiesen nach Messung in Wasser mit Tween 80 und Ultraschall in der Laserstreuung [Coulter®LS /Coulter-Beckmann] folgende Teilchengrößen auf:
Beispiel 2a: D₉₀ = 45,6 µm, D₅₀ = 25,3 µm, D₁₀ = 10,2 µm
Beispiel 2b: D₉₀ = 48,3 µm, D₅₀ = 27,5 µm, D₁₀ = 13,1 µm

Unter dem D90 -Wert ist die Teilchengröße zu verstehen, bei der 90 % der Teilchen nach Masse kleiner sind. D50 ist der Wert bezogen auf 50 % und D₁₀ der Wert bezogen auf 10 % der Teilchen (nach Masse).

### Beispiele 3a (erfindungsgemäß) und 3b (zum Vergleich)

Die gemäß den Beispielen 2a (Beispiel 3a) und 2b (Beispiel 3b) erhaltenen partikulären biozioden (algiziden) Polymere wurden jeweils als Suspension formuliert.

Hierzu wurde das partikuläre biozide (algizide) Polymer aus Beispiel 2 in Wasser/Soprophor S25 suspendiert und dann mit Antischaum, Rhodopol® G Lösung, Preventol® BIT 20 D und Preventol® D7 für etwa eine halbe Stunde magnetisch gerührt.

### Rezeptur:

| | |
|---|---|
| Partikuläres biozides (algizides) Polymer aus Beispiel 2a bzw. 2b: | 20,00 g |
| 2%ige Soprophor S25 Lösung (ein Emulgator auf Basis von Tris-sterylphenyletherethoxylaten): | 25,10 g |
| 1%ige Rhodopol G Lösung (Verdicker auf Basis von Xanthan Gum): | 5,03 g |
| Wacker Antischaum SRE: | 0,360 g |
| Preventol® BIT 20 D [Gebindekonservierungsmittel mit etwa 20 Gew.-% Benzisothiazolinon] | 0,062 g |
| Preventol® D7 [Gebindekonservierungsmittel mit etwa 1,5 Gew.-% Chlormethylisothiazolinon/Methylisothiazolinon 3:1] | 0,053 g |
| Summe | 50,61 g |

Mittels HPLC wurde jeweils ein Gehalt von 8.36 Gew.-% Diuron in der Formulierung der bioziden Mittel bestimmt.

### Beispiele 4a (erfindungsgemäß) und 4b (zum Vergleich)

Zur Bestimmung der Freisetzung des Wirkstoffes in Wasser wurden die Formulierung aus Beispiel 3a (Beispiel 4a) bzw 3b (Beispiel 4b) zu 35 ppm Gesamtgehalt an Diuron 72 Stunden in 1000,0 g deionisiertem Wasser gerührt und der gelöste Anteil analytisch bestimmt. Die maximale Löslichkeit von Diuron in Wasser beträgt unter diesen Bedingungen 35 ppm, d.h. 0,0035 Gew.-%, geringere Mengen frei in der Lösung nachweisbares Diuron zeigen ein Zurückhalten bzw. Verzögern der Wirkstofffreigabe an.

Jeweils 328,5 mg der Formulierungen aus den Beispielen 3a und 3b wurden in einem Becherglas mit 853,2 g VE Wasser versetzt (= 35 ppm Diuron) und unter Magnetrührung 72 h bei Raumtemperatur langsam mit einem Magnetrührer gleich schnell (Rührerdrehzahl 100 U/min) gerührt. Danach wurden etwa 200 ml des Ansatzes durch einen Faltenfilter filtriert (S&S595) und anschließend für 5 min bei 3000 U/min zentrifugiert. Der Überstand wurde abpipettiert und der Diurongehalt mittels quantitativer DC bestimmt.

Für Beispiel 4a) konnten 2,5 ppm Diuron in der Wasserphase nachgewiesen werden, was einer Freisetzungsrate von Diuron aus dem algiziden Polymer von lediglich 7,1 % entspricht.

Für Beispiel 4b) konnten 13,0 ppm Diuron in der Wasserphase nachgewiesen werden, was einer Freisetzungsrate von Diuron aus dem algiziden Polymer von 37,1 % entspricht.

### Beispiel 5

Das gemäß Beispiel 2a erhaltene partikuläre algizide Polymer wurde analog zu Beispiel 3 als Suspension formuliert.

### Rezeptur

| | |
|---|---|
| Partikuläres algizides Polymer gemäß Beispiel 2a bzw. 2 b: | 20,00 g |
| 2%ige Soprophor S25 Lsg. | 19,00 g |
| 1%ige wäßr. Rhodopol G Lösung | 7,00 g |
| Wacker Antischaum SRE (Entschäumer auf Silikonbasis) | 0,383 g |
| Preventol® BIT 20 D | 0,067 g |
| Preventol® D7 | 0,073 g |
| Summe | 46,52 g |

Mittels HPLC wurde ein Gehalt von 9,98 Gew.-% Diuron in der Formulierung bestimmt.

### Beispiel 6

Zur Prüfung von Dispersionsfarben auf Algenfestigkeit wurde wie folgt verfahren:

### Farbe 1

2,5 g der Formulierung aus Beispiel 5 wurden in 100 g einer Reinacrylat basierten Dispersionsfarbe eingearbeitet. Der Gehalt an Diuron betrug 2500 ppm.

### Farbe 2

Durch Mischen von 22 g der Farbe 1 mit 28 g einer unkonservierten Farbe erhielt man eine Farbe mit 1100 ppm Diuron.

### Farbe 3

Durch Mischen von 5 g der Farbe 1 mit 39 g einer unkonservierten Farbe erhielt man eine Farbe mit 550 ppm Diuron.

### Beispiel 7 (zum Vergleich)

### Farbe 4

0,66 g Preventol A 6-D (50 Gew.-% ige wässrige Suspension von Diuron) wurden in 300 g einer Reinacrylat basierten Dispersionsfarbe eingearbeitet. Die farbe wies dann einen Gehalt von 1100 ppm Diuron auf.

### Farbe 5

Durch Mischen von 50 g der Farbe 4 mit 50 g einer unkonservierten Farbe erhielt man eine Farbe mit 550 ppm Diuron.

### Beispiel 8

Die zu prüfenden Farben 1 bis 5 wurden jeweils beidseitig auf wasserfesten Karton (2 Anstriche auf der Oberseite, 1 Anstrich auf der Unterseite) gestrichen und getrocknet. Die getrockneten Prüfkörper wurden dann 72 h bei 20 °C mit fließendem Wasser ausgelaugt und erneut getrocknet.

Die so vorbereiteten Proben wurden daraufhin auf einen Agar-Nährboden und sowohl die Proben als auch der Nährboden mit einer Algensuspension beimpft. Nach einer Inkubationsdauer von 4 Wochen bei 20 °C und einer Beleuchtung mit 3000 bis 3500 Lux wurde abgemustert.

Die Ergebnisse sind in Tabelle 1 dargestellt:

**Tabelle 1 (Biologische Ergebnisse aus Beispiel 8 auf Grundlage der Farben der Beispiele 6 und 7)**

| Farbe Nr. | Diuron-Gehalt der Farbe | Testorganismen in der Algensuspension | Ergebnis / Aussehen |
|---|---|---|---|
| 3 | 550 ppm | *Stichococcus bacillaris Scenedesmus vacuolatus* | Agar bewachsen, Anstrichoberfläche frei von Algen |
| 5 (zum Vergleich) | 550 ppm | *Stichococcus bacillaris Scenedesmus vacuolatus* | Agar und Anstrichoberfläche mit Algen bewachsen |
| 2 | 1100 ppm | *Phormidium spec. Phormidium tergestinum Chlorella vulgaris Desmodesmus communis* | Agar gering mit Algen bewachsen, Anstrichoberfläche frei von Algen |
| 4 (zum Vergleich) | 1100 ppm | *Phormidium spec. Phormidium tergestinum Chlorella vulgaris Desmodesmus communis* | Agar bewachsen, Anstrichfläche gering bis mittel bewachsen. |

Die in den Beispielen 5 bis 8 verwendeten Reinacrylat-basierte Farbe entspricht handelsüblichen Farben und setzte sich folgendermaßen zusammen:

| **Außendispersionsfarbe auf Basis von Mowilith 771 (Reinacrylat)** | |
|---|---|
| Handelsname | Gew.-Teile |
| Walsroder MC 3000 S 2%ig | 30 |
| Calgon N 10%ig | 3 |
| Additol XW 330 10%ig | 1 |
| Agitan in Texanol 1:1 | 1 |
| Titandioxid | 40 |
| Talco IN | 15 |
| Durcal 5 | 45 |
| Wasser dest. | 9.5 |
| Testbenzin | 5 |
| Butyldiglycolacetat | 1.5 |
| NaOH | 3,37 |
| Mowilith DM 771 | 85 |
| Preventol® BIT TD der Fa. Lanxess Deutschland GmbH (enthält ca 5 Gew.-% Benzisothiazolinon und ca 22 Gew.-% Tetramethylolacetylendiharnstoff) | 0,474 |
| **Gesamt** | **239,844** |
| Die Farbe besitzt einen pH-Wert von 8 | |

## Patentansprüche

1. Biozide Stoffe enthaltend ein oder mehrere Polymere enthaltend ein oder mehrere Biozide, wobei zumindest ein Polymer Strukturelemente aufweist, die sich vom Acrylnitril ableiten.

2. Biozider Stoff nach Anspruch 1, **dadurch gekennzeichnet, dass** es als das zumindest eine Polymer, das Strukturelemente aufweist, die sich vom Acrylnitril ableiten, zumindest Styrol-Acrylnitril-Copolymere enthält.

3. Biozider Stoff nach Anspruch 1 oder 2, **dadurch gekennzeichnet, dass** das zumindest eine Polymer, das Strukturelemente aufweist, die sich vom Acrylnitril ableiten, als solches eine Glasübergangstemperatur von 50°C bis 220°C aufweist.

4. Biozider Stoff nach einem der Ansprüche 1 bis 3, **dadurch gekennzeichnet, dass** das zumindest eine Polymer, das Strukturelemente aufweist, die sich vom Acrylnitril ableiten, eine Molmasse von mehr als 1000 g/mol, bevorzugt von 2.000 bis 200.000 und besonders bevorzugt von 3.000 bis 170.000 besitzt.

5. Biozider Stoff nach einem der Ansprüche 1 bis 4, **dadurch gekennzeichnet, dass** der biozide Stoff zu mindestens 98 Gew.-% solche Polymere bezogen auf die Gesamtsumme an Polymeren enthält, die Strukturelemente aufweisen, die sich vom Acrylnitril ableiten.

6. Biozider Stoff nach einem der Ansprüche 1 bis 5, **dadurch gekennzeichnet, dass** er 2 bis 80 Gew.-% an einem oder mehreren Bioziden enthält.

7. Biozider Stoff nach einem der Ansprüche 1 bis 6, **dadurch gekennzeichnet, dass** das Polymere des bioziden Stoffs 2 bis 80 Gew.-% an einem oder mehreren Bioziden enthält.

8. Biozider Stoff nach einem der Ansprüche 1 bis 7, **dadurch gekennzeichnet, dass** das oder die Biozide monolithisch in das Polymer oder die Polymere eingelagert sind.

9. Biozider Stoff nach einem der Ansprüche 1 bis 8, **dadurch gekennzeichnet, dass** als Biozide Fungizide, Algizide, Insektizide, Akarizide, Nematizide, Radizide und Herbizide oder Mischungen davon eingesetzt werden.

10. Biozider Stoff nach einem der Ansprüche 1 bis 9, **dadurch gekennzeichnet, dass** als Biozide Fungizide oder Algizide oder Mischungen davon eingesetzt werden.

11. Biozider Stoff nach einem der Ansprüche 1 bis 10, **dadurch gekennzeichnet, dass** als Biozide Algizide eingesetzt werden.

12. Biozider Stoff nach einem der Ansprüche 1 bis 11, **dadurch gekennzeichnet, dass** als Biozide Algizide eingesetzt werden, die ausgewählt sind aus der Gruppe bestehend aus Isoproturon, Diuron, Cybutryn und Terbutryn.

13. Biozider Stoff nach einem der Ansprüche 1 bis 12, **dadurch gekennzeichnet, dass** er partikulär vorliegt.

14. Verfahren zur Herstellung der bioziden Stoffe nach einem der Ansprüche 3 bis 12, **dadurch gekennzeichnet ist, dass**
a) zumindest ein oder mehrere Polymere, von denen zumindest ein Polymer Strukturelemente aufweist, die sich vom Acrylnitril ableiten und ein oder mehrere Biozide und gegebenenfalls Hilfsstoffe gemischt werden und
b) die nach a) erhaltene Mischung bei einer Temperatur von 50 bis 220°C extrudiert wird.

15. Verfahren zur Herstellung der partikulären bioziden Stoffe nach Anspruche 13, **dadurch gekennzeichnet, dass** es neben den Schritten a) und b) gemäß Anspruch 14 einen weiteren Schritt c) umfasst, der **dadurch gekennzeichnet ist, dass** das nach Schritt b) erhaltene Extrudat derart zerkleinert wird, dass mehr als 90 Gew.-% aller Partikel bezogen auf das eingesetzt Extrudat eine Teilchengröße von 150 µm oder weniger aufweisen.

16. Biozide Mittel enthaltend zumindest einen bioziden Stoff gemäß einem der Ansprüche 1 bis 13.

17. Verfahren zur Bekämpfung von Mikroorganismen, **dadurch gekennzeichnet ist, dass** die Bekämpfung unter Einsatz von bioziden Mitteln nach Anspruch 14 unter Rückbezug auf die Ansprüche 10 bis 12 oder bioziden Stoffen nach einem der Ansprüche 1 bis 10 erfolgt.

18. Verwendung der bioziden Mittel nach Anspruch 14 oder der bioziden Stoffe nach einem der Ansprüche 1 bis 13 zum Schutz von technischen Materialien.

19. Technische Materialien enthaltend biozide Mittel nach Anspruch 14 oder biozide Stoffe nach einem der Ansprüche 1 bis 13

20. Verwendung von Polymeren, die Strukturelemente aufweisen, die sich vom Acrylnitril ableiten zur Herstellung von bioziden Stoffen enthaltend diese Polymere sowie zumindest ein Biozid.
